# EUROPEAN PATENT APPLICATION

(11) **EP 1 342 699 A1**
(43) Date of publication of application: **10.09.2003**
(21) Application number: 03425107.4
(22) Date of filing: 24.02.2003
(51) Int. Cl.: C03B 9/02, C03B 9/03, C03B 9/10

(54) **Apparatus for driving tools for the production of articles made of glass, crystal and the like**

(30) Priority: 08.03.2002 IT FI20020040
(71) Applicant: Bedogni s.r.l., 50050 Montelupo Fiorentino (Firenze) (IT)
(72) Inventor:
(74) Representative: Martini, Lazzaro

(57) **Abstract**

The invention refers to an apparatus for driving tools (5) for the production of articles made of glass, crystal and the like, which have a substantially tubular shape and prevailing longitudinal development; the apparatus (1) comprises: a support frame (2); a pair of jaws (3, 4), disposed on said frame (2) and provided with relevant driving means (5) able to move them close to and away from each other up to positions corresponding to closing and, respectively, opening configurations; a first and second rollers (51, 52), parallel to each other and supported by one (3) of said jaws; a third roller (53), parallel to said first and second rollers, and supported by the other jaw (4) in such a position as to result opposite with respect to the other two rollers (51, 52) thereby delimiting, in conjunction with the latter, with the jaws being in closing position, a seat for receiving said tool (5) to be moved parallel to the rollers, said seat being delimited by three cylindrical surfaces of the same rollers; motorization means (7) acting on at least one of said rollers and able to drive it into rotation about its longitudinal axis.

## Description

The present invention refers to an apparatus for driving tools for the production of articles made of glass, crystal and the like.

In particular, the present apparatus allows removing the molten glass from a furnace and/or working it by using various types of tools, well known in the glassmaking technique such as, for example, the so-called "canes" made up of hollow tubular elements. The apparatus can be used for handling all the known glassmaking canes, such as those drilled for blowing the glass and provided with flat (so-called punty) end for removing the molten glass from a mould and working it in various ways, those provided with "removal ball", and those provided with crab-like end for removing and disposing the finished articles, etc.

It is known that the main systems for the production of glass articles are by blowing, pressing (or moulding), centrifugation, injection and by the combination of more of these systems.

The process of working the glass begins with the removal of the molten material from the mouth of the furnace.

The manual removing procedure requires that the gaffer, with the help of assistants if any, removes the molten glass from the furnace to carry out afterwards one of the previously indicated work techniques, that is, blowing, moulding, centrifugation, etc.

The removal operation, when performed traditionally by hand, is fatiguing and wearisome for the workers, owing to the high temperature and reverberation of the molten mass; at the same time, however, such operation adds very little to what is achieved by the subsequent operating steps. Similarly, when blown glass is to be produced, it must be considered that the blowing operation, when performed in the traditional manner, is demanding and potentially dangerous, as it may cause occupational pulmonary diseases.

A further drawback relates to the case in which the pieces to be produced have large dimensions and the mass to be worked exceeds 6-7 kilograms, so that the worker's job becomes difficult and exhausting; as a consequence, it comes out that, only few pieces of large dimensions can be produced during each work shift. This consideration holds true for all the above cited work systems, but especially for the blowing, because the difficulty of handling incandescent parts of large dimensions adds up to the problem of blowing-in a large volume of air.

The removal of the mass of glass from the furnace can be carried out by a robot having 4, 5 or 6 axes and provided with rotary output axis, with a rod having a metal or ceramic terminal ball for the removal of the glass: the robot removes the molten glass from the furnace and places it on a mould. This robot is suitable for use with both a traditional furnace and a continuous tank, but is limited to pressing and centrifugation operations. It is to be noted that such robot is provided with a rod of its own, which is the same for all the work cycles, so that it cannot take tools of traditional type (such as the canes) from a glassmaker or remove them from a machine, nor it is able to deposit tools, with removed and possibly worked glass, near persons or machines.

A further removal procedure consists in using a carriage movable on guides and provided with a system for aspirating the molten glass, associated with a robot provided with an arm capable of blowing and working the glass. The carriage operates only on continuous furnaces which ensure a constant level of glass; the blowing arm must be provided with a suitable system for the attachment/detachment of the glass since, differently from a work carried out completely by hand, the cane cannot be replaced upon every work cycle. Obviously, this is a complex system, as the glass is made to pass, upon every work cycle, through two separate machines. Further limitations are the shape of the glass-attachment part, which is almost flat and thus unsuited for pieces of small dimensions. A remarkable drawback of the system is due to the rapid wear of the parts in contact with the molten glass, both in the carriage-removal section and in the robot's system for glass attachment/detachment.

The main object of the present invention is to overcome the above mentioned drawbacks.

This result has been achieved, according to the invention, by adopting the idea of making a tools-driving apparatus for the production of articles made of glass and the like, having the features disclosed in claim 1. Further characteristics being set forth in the dependent claims.

The advantages deriving from the present invention lie essentially in the fact that it is possible to eliminate the manual removal of the molten glass from the furnace thereby suppressing an operating step which is most burdensome to the workers and has least added value; that the operations are more flexible since it is possible to make both small and large pieces by using canes of suitable type and size; that the apparatus is able to use both common canes for glassmaking and those especially produced or suited for specific purposes; that it is possible to produce pieces at a lesser or higher rate or with less or more accurate work process; that it is possible to remove an almost constant amount of glass at every work cycle, and to control, by a computer or a PLC system, the quantity of glass being removed; that such advantages are obtainable from a continuous and semi-continuous furnace and from a traditional furnace as well in which the level of glass decreases with the time; that there is obtained a significant output flexibility and a reduced number of scraps; that the produced articles are comparable to those made by hand; that the quality of the products is steady throughout the work shift with consequent smaller number of discarded pieces; that it is possible to produce pieces of large sizes during the whole work shift; that it is possible to employ labour with relatively limited expertise; that the work cycle results easily modifiable as it requires changing only the work parameters in the computer or PLC system associated with the apparatus; that whole operating steps can be added or suppressed and, for example, replaced by similar operations performed by hand or by further specific machines; finally, as far as the production of blown glass is concerned, specific advantages consist in the elimination of the step of mouth-blowing the glass, in the flexibility of work type obtainable by associating basic operations such as removal, modelling (or " blocking") and blowing with other treatments, like the coating with colouring oxides or other substances followed by baking within a heating oven, in the coating of a drop of molten material with one or more layers of glass or with a quantity of glass of other colours (lined glass).

These and other advantages and characteristics of the invention will be best understood by anyone skilled in the art from a reading of the following description in conjunction with the attached drawings given as a practical exemplification of the invention, but not to be considered in a limitative sense, wherein:
- Fig. 1 is a schematic side view, with parts taken away and others seen-through, of a possible example of embodiment of the present invention;

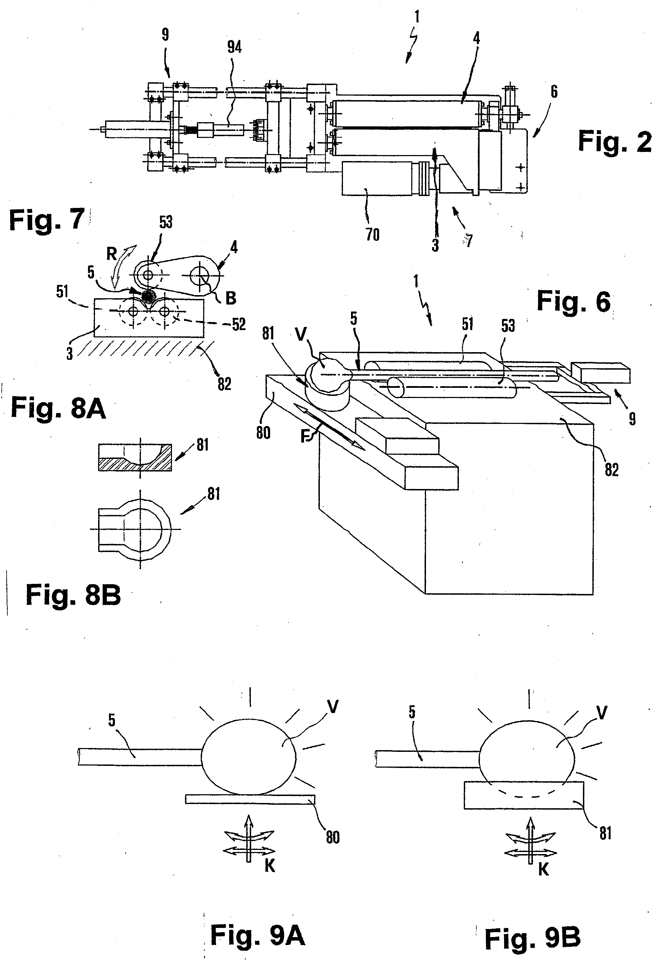

- Fig. 2 is a schematic plan view of the example of Fig. 1;
- Fig. 3 is a scheme relating to the kinematical connection between motorization means and relevant driven rollers provided in the present apparatus;
- Fig. 4 is a scheme relating to the operation of a pair of jaws provided in the present apparatus;
- Figs. 5A, 5B, 5C and 5D refer to different examples of how to drive the jaws of the apparatus;
- Fig. 6 is a schematic perspective view of an application of the present apparatus;
- Fig. 7 relates to a detail of the example in Fig. 6;
- Figs. 8A and 8B are, respectively, a sectional view and a plan view of a modelling form or "block" to be used with the present apparatus; and
- Figs. 9A and 9B are schematic side views of two examples of working by using the modelling forms or "blocks".

With reference to the accompanying drawings, an apparatus according to the present invention can be used for driving tools intended for the production of glass article and the like, having a substantially tubular shape and a prevailing longitudinal development.

In its general form, the apparatus 1 comprises: a pair of jaws 3 and 4 disposed on the frame 2 and provided with relevant driving means 6 able to move them close to and away from each other up to positions corresponding to closing and, respectively, opening configurations; a first 51 and second 52 rollers, parallel to each other and supported by one 3 of said jaws; a third roller 53, parallel to said first 51 and second 52 rollers, and supported by the other jaw 4 in such a position as to result opposite with respect to the other two rollers 51, 52 thereby delimiting, in conjunction with the latter, and with the jaws being in closing position, a seat for receiving said tool 5 to be moved parallel to the rollers, said seat being delimited by three cylindrical surfaces of same rollers; motorization means 7 acting on at least one of said rollers and able to drive it into rotation about its longitudinal axis.

In practice, the apparatus 1 allows removing, driving into rotation and releasing tools 5 (for example, glassmaking canes), as it is able to retain said tools inside three suitably motor-driven rollers 51, 52 and 53. The introduction into, and exit out of, the apparatus 1 is made possible by suitably opening and closing the jaws 3 and 4. The apparatus 1, moreover, as will be explained later on, can be associated with other machines such as, for example, an automatic blower or a robot, with consequent advantages of use.

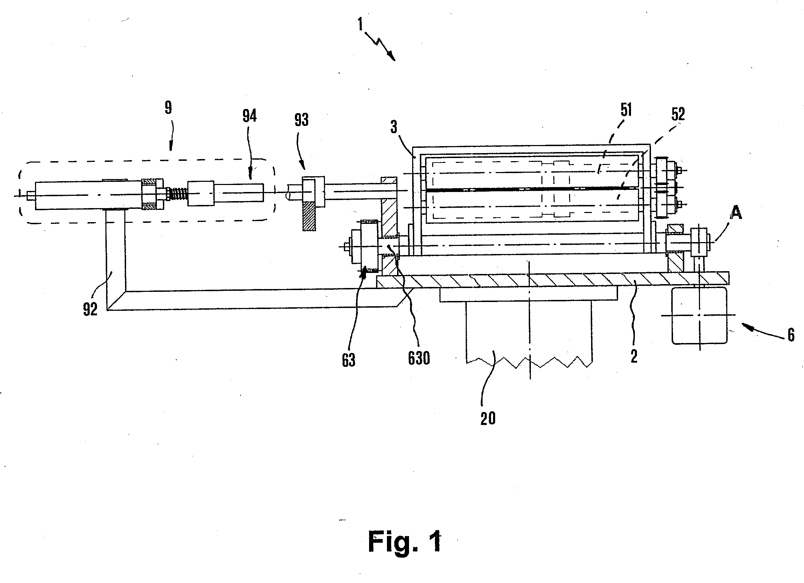

In particular, the frame 2 of the apparatus 1 may be applied to another machine such as a six-axis robot. In Fig. 1, numeral 20 designates the so-called "wrist" part of the robot, that is, the one that can be suitably moved along the robot's driving axes.

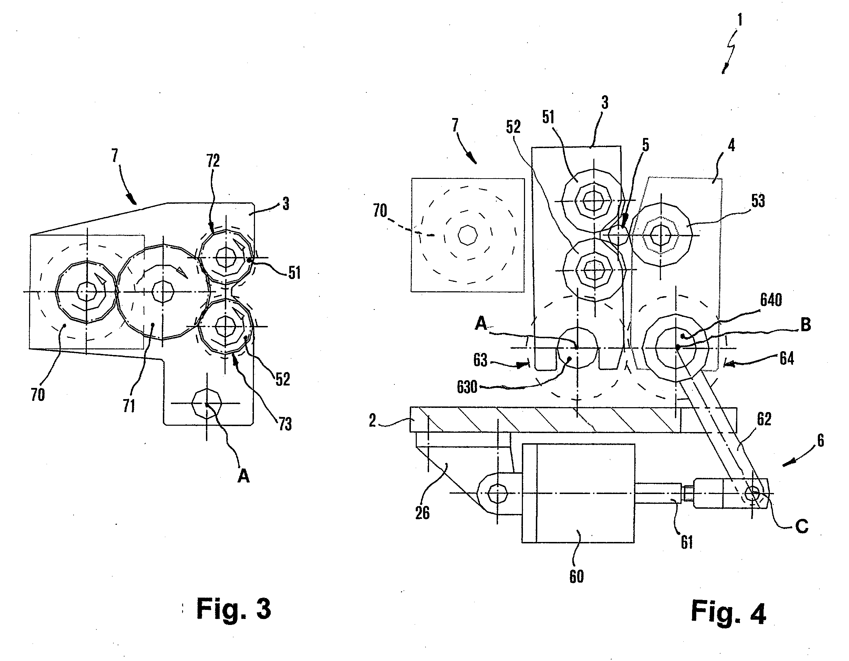

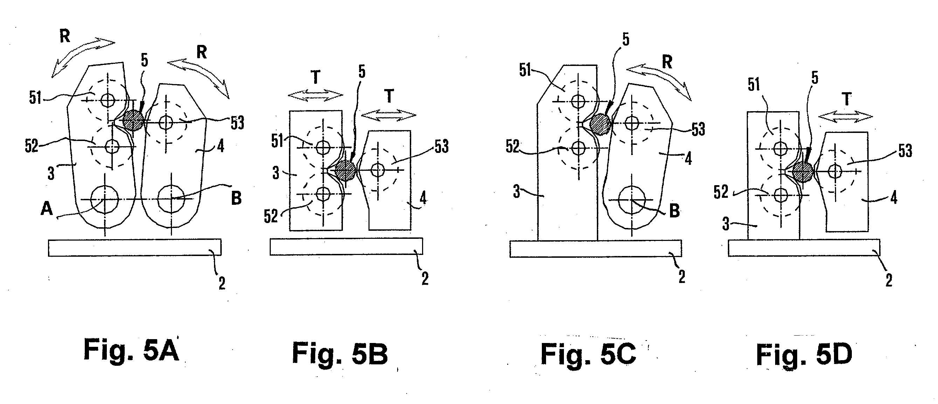

Disposed on the frame 2 are the jaws 3 and 4. Fig. 4 shows an example of embodiment of the means 6 for driving the jaws 3 and 4, while Figs. 5A-D show different shapes of the apparatus' jaws. In Fig. 5A the two jaws 3 and 4 have their fulcra on the frame 2, respectively in correspondence of the relevant hinge axes A and B, and their movement (indicated by double arrows R) takes place by a rotation about said hinge axes A and B.

In Fig. 5B, the two jaws 3 and 4 are both disposed on a slide or carriage (not shown), movable relative to the frame 2, and their movement is by translation, as indicated by the double arrows T.

In the example of Fig. 5C, the jaw is solid to the frame 2, whereas the jaw 4 pivots about the axis B and its movement is a rotation R about such axis.

Finally, in Fig. 5D, the jaw 3 is solid to the frame 2, whereas the jaw 4 is disposed on a slide or carriage movable relative to the frame 2 and its movement is by a translation, as indicated by the double arrow T. Also in this example, the slide or carriage bearing the jaw 4 is not illustrated.

In the description that follows, where reference is made in particular to Fig. 4, the driving means 6 provided for the jaws 3 and 4 relate to the schematic example of Fig. 5A where both said jaws are made to pivot.

The driving means 6 comprise a cylinder 60, for example of pneumatic type, fixed to a bracket 26 of the frame 2. The rod 61 of cylinder 60 is hinged to a first end (about the axis indicated by C) of a lever 62 whose opposite end is keyed on a shaft 640 coincident with the axis B of hinge engagement of jaw 4 to the frame 2. Keyed on said shaft 640, which is solid to the jaw 4, is a gear 64 which is in meshing engagement with a corresponding gear 63 provided on the shaft 630 coincident with the axis A of jaw 3 and solid to the latter. In this way, reference being made to the example of Fig. 4, the moving of the rod 61 out of the cylinder 60 determines a displacement to the right of the lower part of lever 62, with consequent counterclockwise rotation of shaft 640 and of jaw 4 solid thereto. This determines the concurrent clockwise rotation of gear 63 meshing with gear 64 and, therefore, the concurrent clockwise rotation of jaw 3. In practice, there is obtained a movement of the two jaws close to each other up to a positioning thereof in closing configuration which allows the cylindrical surfaces of the rollers to grasp the tool or cane 5 and drive it into rotation. On the other hand, by the activation of cylinder 60 in opposite direction, the jaws take up the opening configuration in which the tool or cane 5 can be removed.

The clamp-like opening and closing of jaws 3 and 4 by pneumatic means, as described above, can be activated also by hydraulic, electromechanical and electromagnetic systems. Moreover, provision may also be made for mechanical, optical or magnetic sensors for the opening and closing of the jaws. As above mentioned, the opening and closing can be operated also by acting on one jaw only or on both; the movement of the jaw(s) can be a translation, or a rotation or a combination thereof. In case of a clamp with two movable jaws, the actuation, whatever the nature thereof, can act either separately on each part, that is, by utilizing two actuators, or on one part only through a suitable mechanical drive system like that previously described by way of example.

Shown in Fig. 3 is a possible example of how to provide the kinematical connection between said rollers 51 and 52. The motorization means 7 comprise an electric motor 70 which may be, for example, a brushless motor or, when minor performance characteristics are required, a three-phase asynchronous motor controlled by an inverter, or a direct current motor. An encoder may be used in case a very accurate control of the position and rotary speed of the rollers is required.

The rollers 51, 52 and 53 which drive the cane into rotation can be completely made of steel, with the outer surface knurled and hardened by carburizing and nitriding processes; alternatively, the rollers may be coated with rubber having suitable characteristics or made of any material suited for use. The diameter and length of the rollers that drive the cane into rotation have standard values; however, in order to meet specific requirements, it is possible to change the diameter and length of the rollers to accomodate canes of unusual sizes, or to change the distance between the same rollers, or to comply with any special demand.

With reference to Fig. 3, the motor 70 is connected to a reducer 71 which is in meshing engagement with corresponding gears 72 and 73 solid to said rollers 51 and 52. The roller 53 provided on the other jaw 4 can be made to pivot idly with respect to the latter.

As previously indicated, the right choice of the type of motor and the consequent mode of operation and control thereof, will determine the optimal drive of the rollers and the tool retained by them.

When necessary, provision may be made for a cane-dispensing system that can be constructed in various ways: for example, the canes may be delivered in vertical, horizontal or slanting condition. The dispensing system may be provided with a unit (not shown) for heating the canes 5 and consisting of a burner for methane or other fuel, or an electric burner. The advancement and release of the canes 5 by the jaws of apparatus 1 can be achieved by an electromechanical, electromagnetic, pneumatic or hydraulic system. Alternatively, a loading bench of completely manual type and provided with reference abutments may be used to allow the robot to remove the cane from a precisely defined position.

For repeating works performed by continuous furnaces, a simplified application may be provided, for example with the use of a four-axis, instead of a six-axis, robot, while maintaining unchanged the remaining parts of the apparatus. Again, continuous furnaces may be provided with the apparatus in question, associated with a more or less simple robot, that is, one having two or three axes, and mounted on a carriage movable on guides.

Finally, provision may be made for a "static" version of the present apparatus, mounted on a ground bench, by abandoning the application of any robot, as in the case of Figs. 6 and 7, in which the apparatus 1 is represented only schematically and partially. In this case, the jaw 3 is fixed, disposed on the bench 82, whereas the jaw 4 is made to pivot about the axis B (for the sake of simplicity, the jaw 4 is illustrated in Fig. 7 only; in Fig. 6 there are illustrated, by way of example, only two rollers 51 and 53 disposed opposite to each other on the two sides of a cane 5 which carries glass V under treatment). The apparatus may be provided with one or more modelling forms suitably shaped and mounted either on a slide 80 able to translate (see arrow F), or on another movable system. The modelling forms 81 (or "blocks", illustrated in Figs. 8A and 8B), when present, may be provided with one or more movements, in the same way as the plane 80 (see arrows K in Figs. 9A and 9B): in this way, the apparatus is able to complete the operations autonomously and, if required, to perform the concurrent free pre-blowing of the piece V carried by the cane 5. The movement of the modelling form can be obtained by an electromechanical, electromagnetic, pneumatic or hydraulic system.

In Fig. 1, the apparatus is shown associated with an automatic blower 9, schematically represented and encircled by a dashed line. The blower 9 (shown schematically also in other figures) may be of a type described in the Patent Application IT-FI99A000045 and for this reason, not described herein in detail. In particular, the rollers of the apparatus are so disposed as to allow the cane to emerge from one side thereof by such an extent allowing a pneumatic connection of the same cane with the automatic blower 9. The blower is connected to the frame 2 via a support 92. The cane 5 is guided, by a relevant cane-guide device 93, to a blowing mouth 94 which performs the required operations.

## Claims

1. Apparatus for driving tools (5) for the production of articles made of glass, crystal and the like, which have a substantially tubular shape and prevailing longitudinal development, **characterized in that** it comprises:
- a support frame (2);
- a pair of jaws (3, 4), disposed on said frame (2) and provided with relevant driving means (5) able to move them close to and away from each other up to positions corresponding to closing and, respectively, opening configurations;
- a first and second rollers (51, 52), parallel to each other and supported by one (3) of said jaws;
- a third roller (53), parallel to said first and second rollers, and supported by the other jaw (4) in such a position as to result opposite with respect to the other two rollers (51, 52) and thereby delimiting, in conjunction with the latter, with the jaws being in closing position, a seat for receiving said tool (5) to be moved parallel to the rollers, said seat being delimited by the three cylindrical surfaces of the same rollers;
- motorization means (7) acting on at least one of said rollers and able to drive it into rotation about its longitudinal axis.

2. Apparatus according to claim 1, **characterized in that** at least one (4) of said jaws has its fulcrum on said frame (2) and its movement is by rotation about the relevant hinge axis (B).

3. Apparatus according to claim 2, **characterized in that** both said jaws (3, 4) have their fulcra on said frame (2) and their movement is by rotation about the relevant hinge axes (A, B).

4. Apparatus according to claim 1, **characterized in that** at least one (4) of said jaws is disposed on a slide or carriage movable relative to said frame (2) and its movement is by translation.

5. Apparatus according to claim 4, **characterized in that** both said jaws (3, 4) are disposed on a slide or carriage movable relative to said frame (2) and its movement is by translation.

6. Apparatus according to claim 1, **characterized in that** said motorization means (7) comprise a motor (70) with a motor-reducer (71) kinematically connected with one of said rollers (52).

7. Apparatus according to claims 1 and 2 or 3,
**characterized in that** said means (6) for moving the jaws comprise an operating cylinder (60) one end of which is fixed to said frame (2), the other end being connected with one of said jaws (4).

8. Apparatus according to claim 1, **characterized in that** the apparatus (1) is associated with an automatic blower (9), said rollers (51, 52, 53) being so disposed as to cause said tool (5) to protrude externally from one side of said rollers by such an extent allowing a pneumatic connection thereof with said automatic blower (9).

9. Apparatus according to claim 1, **characterized in that** said frame (2) is fixed to an automatic operating machine or robot.

10. Apparatus according to claim 1, **characterized in that** the said rollers (51, 53, 53) are made of steel, with their outer surface being knurled and hardened.
